(19) Europäisches Patentamt
European Patent Office
Office européen des brevets

(11) Veröffentlichungsnummer: **0 094 642**
**A1**

(12) **EUROPÄISCHE PATENTANMELDUNG**

(21) Anmeldenummer: **83104743.6**

(22) Anmeldetag: **13.05.83**

(51) Int. Cl.$^3$: **C 09 B 23/16**
D 21 H 3/80, D 06 P 1/42
C 09 B 67/22

(30) Priorität: **17.05.82 CH 3050/82**

(43) Veröffentlichungstag der Anmeldung:
**23.11.83 Patentblatt 83/47**

(84) Benannte Vertragsstaaten:
**CH DE FR GB IT LI SE**

(71) Anmelder: **CIBA-GEIGY AG**
**Patentabteilung Postfach**
**CH-4002 Basel(CH)**

(72) Erfinder: **Stingelin, Willy**
**Stockackerstrasse 1A**
**CH-4153 Reinach(CH)**

(72) Erfinder: **Loew, Peter, Dr.**
**Concordiastrasse 23**
**CH-4142 Münchenstein(CH)**

(74) Vertreter: **Zumstein, Fritz, Dr. et al,**
**Bräuhausstrasse 4**
**D-8000 München 2(DE)**

(54) **Mischung kationischer Verbindungen.**

(57) Eine Mischung von kationischen Verbindungen der Formeln

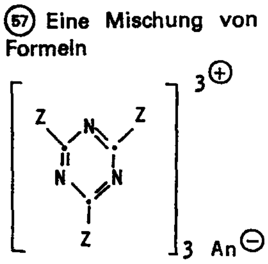
III

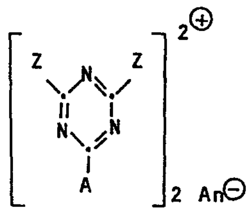
IIIa

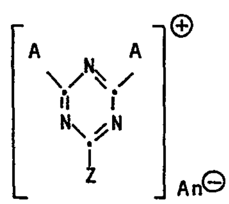
IIIb

wird erhalten durch Umsetzung einer Verbindung der Formel

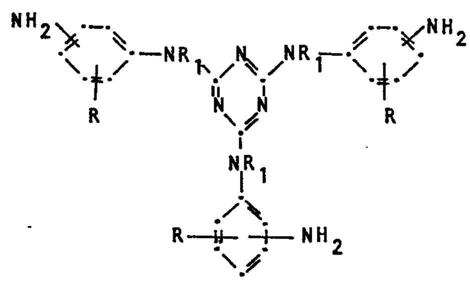
(I)

./...

EP 0 094 642 A1

mit einer Aldehydverbindung der Formel II

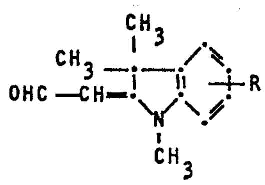

(II)

im wässrigen oder organischen Medium in Gegenwart einer Säure; in den Formeln haben die Symbole die im Anspruch 1 angegebene Bedeutung. Die erhaltenen Mischungen eignen sich zum Färben und Bedrucken von Textilmaterialien, Leder und Papier wobei man neutralgelbe Ausfärbungen erhält.

CIBA-GEIGY AG
Basel (Schweiz)

1-13917/+

Mischung kationischer Verbindungen

Die Erfindung betrifft ein Verfahren zur Herstellung einer neuen Mischung von kationischen Verbindungen, die gemäss dem Verfahren erhaltene Mischung sowie deren Verwendung zum Färben und Bedrucken von Textilmaterialien, Leder und Papier.

Die neue Mischung besteht aus mindestens zwei kationischen Verbindungen der Formel

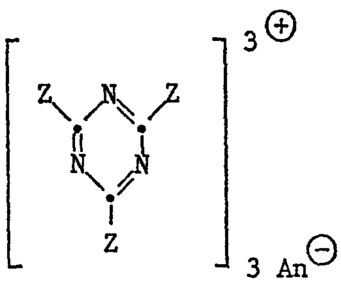

III

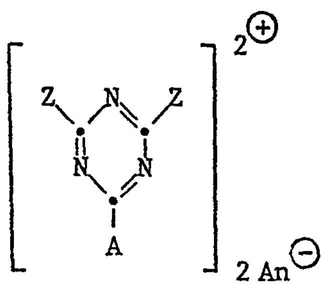

IIIa

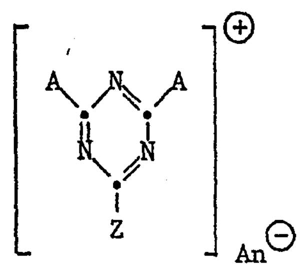

IIIb

worin bedeuten:

Z einen Rest der Formel

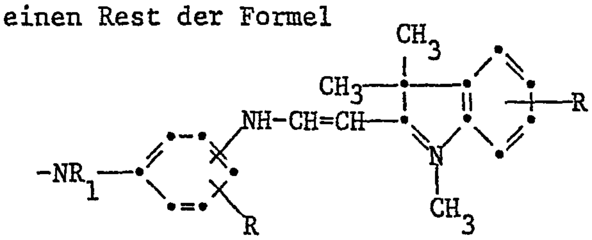

A einen Rest der Formel

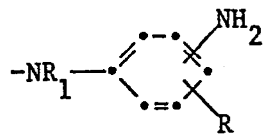

worin R Wasserstoff, $C_1$-$C_4$-Alkyl, $C_1$-$C_4$-Alkoxy oder Halogen und $R_1$ Wasserstoff oder $C_1$-$C_4$-Alkyl bedeutet, und
An ein Anion, das
erhalten wird durch Umsetzung einer Verbindung der Formel I

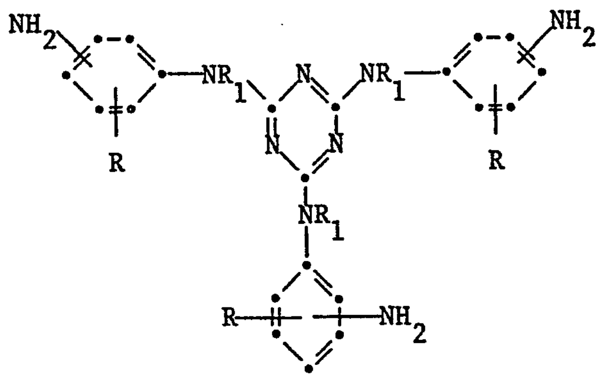

(I)

mit einer Aldehydverbindung der Formel II

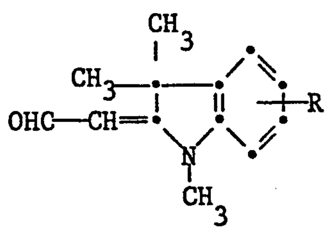

(II)

im wässerigen oder organischen Medium in Gegenwart einer Säure, in welchen Formeln die Symbole R und $R_1$ die angegebene Bedeutung haben.

R und $R_1$ in der Bedeutung von $C_1$-$C_4$-Alkyl stellt eine unverzweigte oder verzweigte Alkylgruppe dar wie z.B. eine Methyl-, Aethyl-, n- oder iso-Propyl- oder n-, sec- oder tert. Butylgruppe.

Bedeutet R $C_1$-$C_4$-Alkoxy so handelt es sich um eine unverzweigte oder verzweigte Alkoxygruppe wie z.B. um die Methoxy-, Aethoxy-, n-und iso-Propoxy- oder n- und tert.-Butoxygruppe.

Bedeutet R ein Halogenatom so handelt es sich vor allem um das Fluor, Chlor oder Bromatom.

Es ist auch möglich, dass der Substituent R mehrmals in ein und demselben Benzolring vorkommen kann.

Bevorzugt stellen R und $R_1$ je Wasserstoff dar.

Bei dieser Mischung von Verbindungen kann es sich beispielsweise um eine solche handeln, die aus zwei oder drei Komponenten der Formel III, IIIa und IIIb besteht; diese Komponenten können dabei bezogen auf die Substituenten R und $R_1$ gleich oder verschieden sein, wobei diese Komponenten noch Isomerie aufweisen können, indem z.B. die $NH_2$-Gruppe im Rest A oder die NH-Gruppe im Rest Z einmal in para- und einmal in meta-Stellung zur $NR_1$-Gruppe steht.

In den bevorzugten Mischungen bedeutet R jeweils Wasserstoff und die -NH- bzw. $NH_2$ Gruppe in Z bzw. A ist in p-Stellung zur $-NR_1$-Brücke gebunden. Des weiteren bestehen bevorzugte Mischungen aus den Verbindungen der Formeln III und IIIa und insbesondere aus den Verbindungen der Formel III, IIIa und IIIb.

Als Anionen An kommen sowohl anorganische wie organische Anionen in Frage; beispielsweise sind genannt: Halogen, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen oder komplexe Anionen wie das von Chlorzinkdoppelsalzen.

Bevorzugte Anionen An sind das Formiat-, Acetat-, Lactat-, Chlorid-, Sulfat- und Phosphation.

Wird die Verbindung der Formel I mit der Aldehydverbindung der Formel II im wässrigen Medium umgesetzt, so kann diese Umsetzung bei einer Temperatur von 0 bis 100°C erfolgen. Arbeitet man im organischen Medium, z.B. in aliphatischen Alkoholen wie Aethanol oder auch Cellosolve, so erfolgt die Umsetzung bei einer Temperatur von 0 bis 50°C. In beiden Fällen arbeitet man in Gegenwart einer Säure HAn. Bei dieser Säure handelt es sich beispielsweise um eine organische Säure, wie Ameisensäure, Essigsäure, Milchsäure oder Arylsulfonsäure, vor allem Benzolsulfonsäure, oder um eine anorganische Säure wie Salzsäure, Schwefelsäure oder Phosphorsäure.

Die Verbindung der Formel II wird vorzugsweise in einer Menge von 1,2-2,99 Mol und insbesondere in einer Menge von 2,8-2,99 Mol bezogen auf 1 Mol Triazinverbindung angewendet.

Nach der Kondensationsreaktion der Verbindung I mit II werden die neuen Mischungen gegebenenfalls vom Reaktionsmedium getrennt und getrocknet. Falls gewünscht oder erforderlich, kann man in den kationischen Mischungen das Anion An nach bekannter Art und Weise gegen ein anderes Anion austauschen.

Die Verbindungen der Formel I sind bekannt und können nach bekannter Art und Weise hergestellt werden. Eine Möglichkeit besteht beispielsweise darin, dass man im symmetrischen Trichlortriazin die Chloratome stufenweise mit gleichen oder verschiedenen Verbindungen der Formel

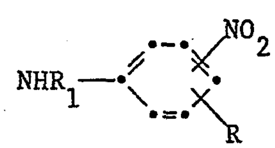

umsetzt und anschliessend im Kondensationsprodukt die $NO_2$-Gruppe zur $NH_2$-Gruppe reduziert.

Die Aldehydverbindungen der Formel II sind ebenfalls bekannt und können nach bekannten Methoden hergestellt werden. Als Aldehydverbindungen kommen beispielsweise in Frage:

1,3,3-Trimethyl-2-methylen-indolin-ω-aldehyd und 1,3,3-Trimethyl-5-chlor-2-methylen-indolin-ω-aldehyd.

Die neuen Mischungen von Verbindungen lassen sich direkt, nach Einengen des Reaktionsmediums in eine flüssige Handelsform überführen.

Verwendung finden die neuen Mischungen zum Färben und unter Zusatz von Binde- und gegebenenfalls Lösungsmitteln zum Bedrucken von mit kationischen Farbstoffen anfärbbaren Materialien, insbesondere Textilmaterialien die z.B. vorteilhaft aus Homo- oder Mischpolymerisaten des Acrylnitrils bestehen oder synthetische Polyamide oder Polyester, welche durch saure Gruppen modifiziert sind. Man färbt vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden oder Pullover.

Durch die Applikation der Farbstoffe lassen sich egale grünstichig- bis rotstichig-gelbe Färbungen bzw. Drucke herstellen, die sich durch sehr gute Allgemeinechtheiten auszeichnen.

Des weiteren können die neuen Mischungen auch zum Färben und Bedrucken von natürlichen und regenerierten Cellulosematerialien vor allem von Baumwolle und Viscose verwendet werden, wobei man ebenfalls grünstichig- bis rotstichig-gelbe farbstarke Ausfärbungen erhält. Die neuen Mischungen haben auf diesen Textilmaterialien ein gutes Ziehvermögen, einen guten Ausziehgrad und die erhaltenen Färbungen weisen sehr gute Echtheiten, vor allem Nassechtheiten auf.

Eine weitere Verwendung der neuen Mischungen liegt in der Anwendung zum Färben von Papier aller Arten, vor allem von gebleichtem, ungeleimtem und geleimtem ligninfreiem Papier. Ganz besonders geeignet sind diese Mischungen zum Färben von ungeleimtem Papier (Servietten)

als Folge ihrer sehr hohen Affinität zu diesem Substrat.

Die neuen Mischungen ziehen sehr gut auf diese Substrate auf, wobei die Abwasser farblos bleiben, was ein eminenter ökologischer Vorteil insbesondere im Hinblick auf die heutigen Abwasser-Gesetze ist.

Die erhaltenen Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für Servietten erwünscht, bei denen vorhersehbar ist, dass das gefärbte Papier in nassem Zustand (z.B. getränkt mit Wasser, Alkohol, Tensid-Lösung etc...) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffmischungen ist für das Kontinue-Färben von Papier von grossem Vorteil und ermöglicht einen viel breiteren Einsatz dieses bekannten wirtschaftlichen Verfahrens.

Schlussendlich können die neuen Mischungen noch zum Färben von Leder (durch z.B. Sprühen, Bürsten und Tauchen) verwendet werden und zur Bereitung von Tinten.

Die folgenden Beispiele veranschaulichen die Erfindung, ohne sie darauf zu limitieren. Die Temperaturen sind in Grad Celsius angegeben. Teile (T) bedeuten Gewichtsteile und %-Angaben sind Gewichtsprozente. Die Abkürzung RKN stellt eine Qualitätsbezeichnung dar und gibt den Reinheitsgrad der Cellulose an; die Abkürzung SR = Schopper-Riegler gibt den Mahlgrad an.

Beispiel 1: 8,8 T (1 Mol) 2,4,6-s-Tri-(4'-aminophenylamino)-triazin und 12,0 T (2,7 Mol) 1,3,3-Trimethyl-2-methylenindolin-ω-aldehyd werden in 52 T Ethanol und 3,0 T 85 %ige wässriger Ameisensäure während 10 Stunden bei 20 bis 30° verrührt. Man destilliert im Vakuum das Ethanol ab und trocknet den ausgefallenen Farbstoff bei 50 bis 60°. Man erhält 23,4 T einer gelben Farbstoffmischung folgender Struktur:

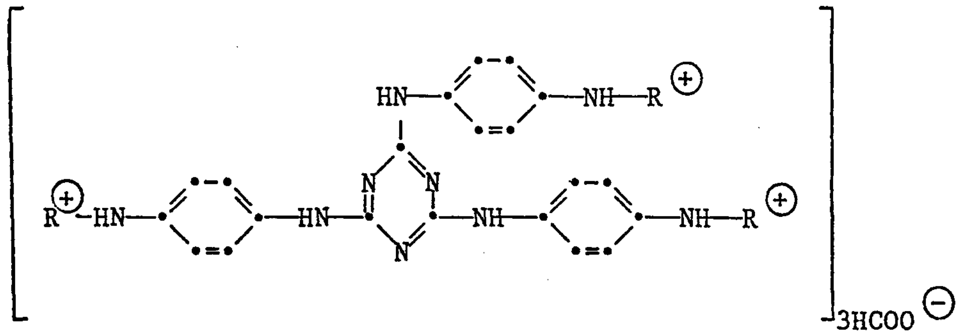

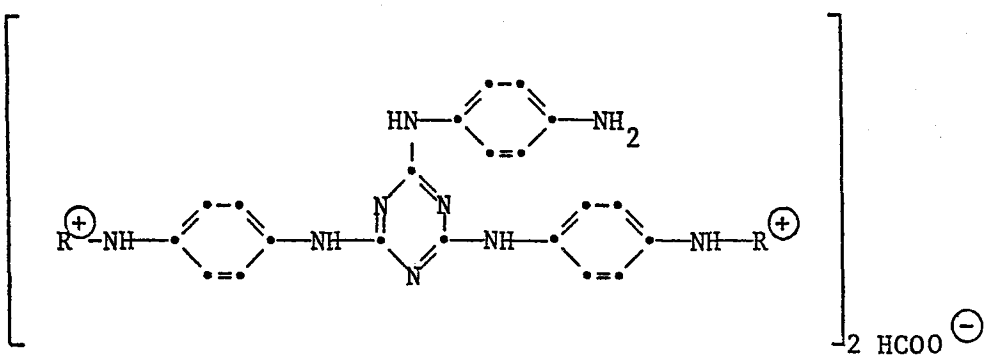

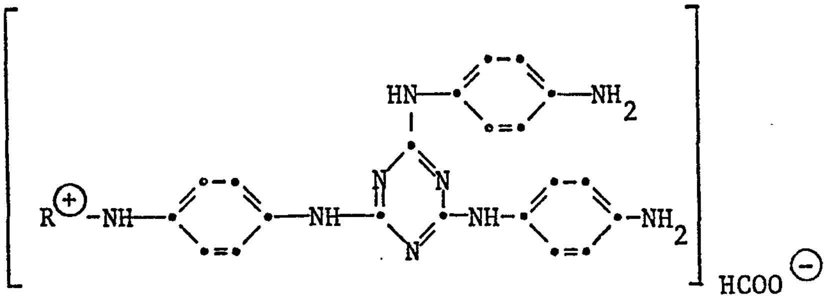

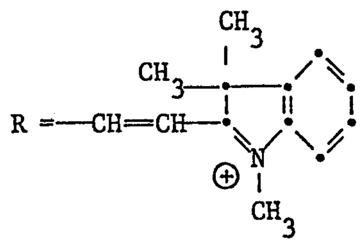

Beispiel 2: 8,8 T (1 Mol) 2,4,6-s-Tri(4'-aminophenylamino)-triazin und 13,0 T (2,95 Mol) 1,3,3-Trimethyl-2-methylenindolin-ω-aldehyd werden in 52 T Methanol und 8,2 T 87 %ige wässerige 2-Hydroxypropionsäure 10 Stunden bei 20-30° verrührt. Man destilliert im Vakuum das Methanol ab und trocknet den ausgefallenen Farbstoff bei 50-60°. Man erhält 26,5 T einer gelben Farbstoffmischung folgender Struktur:

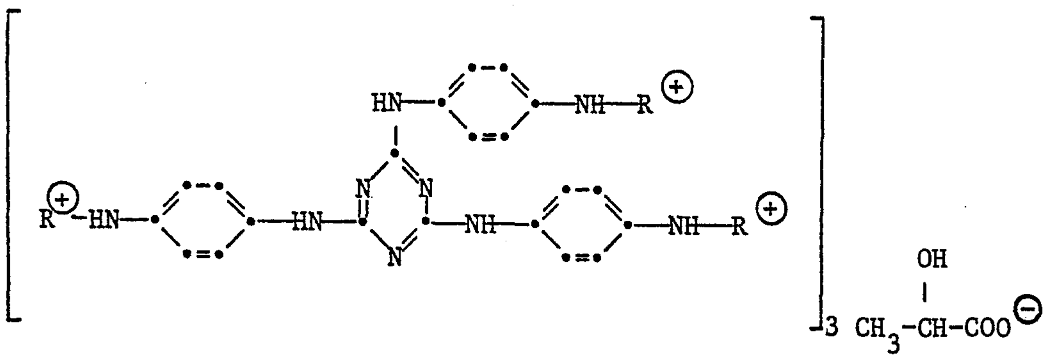

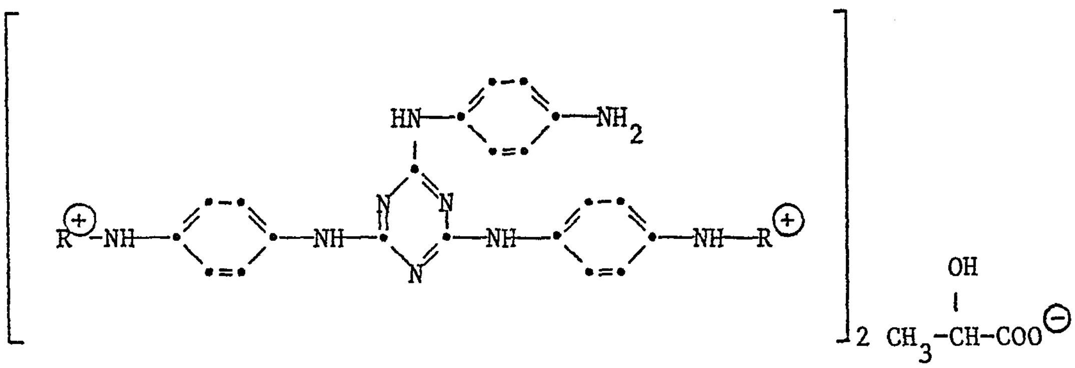

R = 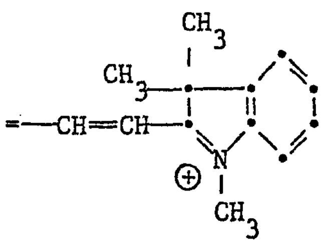

<u>Beispiel 3:</u> Man vermischt 50 T chemisch gebleichte Buche Sulfit mit 50 T gebleichtem RKN 15 (Mahlgrad 22° SR) und 2 T des Farbstoffgemisches gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist in einer sehr intensiven Neutralgelbnuance gefärbt. Das Abwasser ist völlig farblos. Der Ausziehgrad erreicht praktisch 100 %. Die Licht- und Nassechtheiten sind ausgezeichnet.

Beispiel 4: Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffgemisches gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine Neutralgelbnuance von mittlerer Intensität. Das Abwasser ist völlig farblos.

Beispiel 5: 10 T Baumwollgewebe (gebleichte mercerisierte Baumwolle) werden in einem Labor-Baumfärbeapparat in 200 T einer Flotte (Wasserhärte 10° dH, pH 4, 3 Umwälzungen der Färbeflotte pro Minute) die 0,05 T des Farbstoffgemisches gemäss Beispiel 1 gefärbt. Die Temperatur wird in 60 Minuten von 20° auf 100° aufgeheizt, dann während 15 Minuten konstant gehalten.

Die Färbeflotte ist völlig ausgezogen. Es entsteht auf dem Baumwollgewebe eine farbstarke neutralgelbe Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoffgemisch des Beispiels 1 eine farbstarke neutralgelbe Färbung, die eine gute Lichtechtheit und sehr gute Nassechtheit besitzt.

Patentansprüche

1. Mischung aus mindestens zwei kationischen Verbindungen der Formel

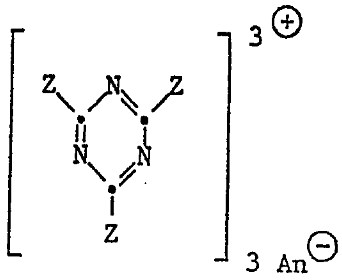

III

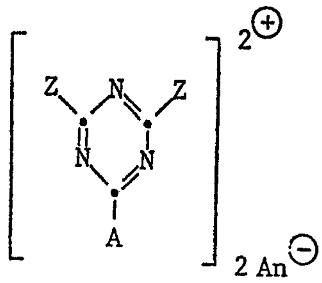

IIIa

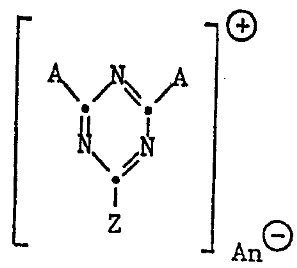

IIIb

worin bedeuten:

Z einen Rest der Formel

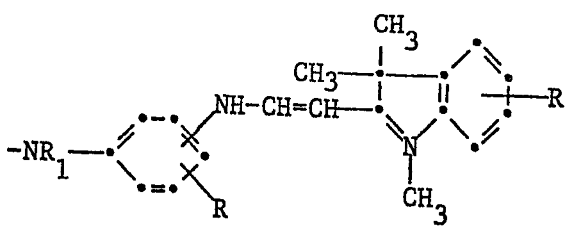

A einen Rest der Formel

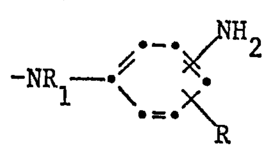

worin R Wasserstoff, $C_1$-$C_4$-Alkyl, $C_1$-$C_4$-Alkoxy oder Halogen und $R_1$ Wasserstoff oder $C_1$-$C_4$-Alkyl bedeutet, erhalten durch Umsetzung einer Verbindung der Formel

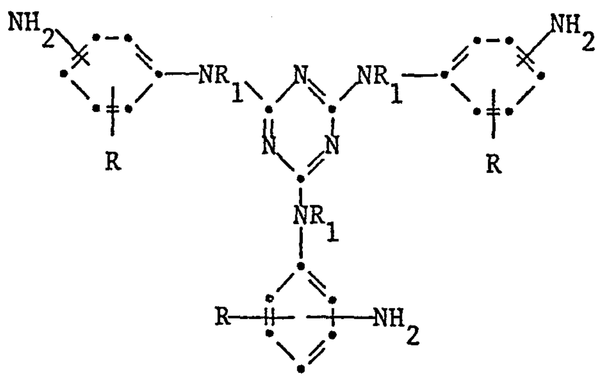

(I)

mit einer Aldehydverbindung der Formel II

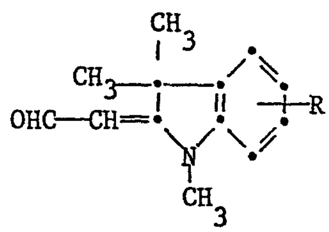

(II)

im wässerigen oder organischen Medium in Gegenwart einer Säure, in welchen Formeln die Symbole R und $R_1$ die angegebene Bedeutung haben.

2. Mischung gemäss Anspruch 1 erhalten durch Umsetzung von 1 Mol einer Verbindung der Formel I mit 1,2-2,99 Mol einer Aldehydverbindung der Formel II.

3. Mischung gemäss Anspruch 1 erhalten durch Umsetzung von 1 Mol einer Verbindung der Formel II mit 2,8-2,99 Mol einer Aldehydverbindung der Formel II.

4. Mischung gemäss Anspruch 1, dadurch gekennzeichnet, dass sie aus den Verbindungen der Formel III und IIIa besteht.

5. Mischung gemäss Anspruch 1, dadurch gekennzeichnet, dass sie aus den Verbindungen der Formel III, IIIa und IIIb besteht.

6. Mischung gemäss den Ansprüchen 1 bis 5, dadurch gekennzeichnet, dass R und $R_1$ jeweils Wasserstoff bedeutet.

7. Mischung gemäss Anspruch 1 erhalten durch Umsetzung einer Verbindung der Formel I mit einer Aldehydverbindung der Formel II im wässrigen Medium bei einer Temperatur von 0 bis 100° C.

8. Mischung gemäss Anspruch 1 erhalten durch Umsetzung einer Verbindung der Formel I mit einer Aldehydverbindung der Formel II im organischen Lösungsmittel bei einer Temperatur von 0 bis 50° C

9. Mischung gemäss Anspruch 8 erhalten durch Umsetzung einer Verbindung der Formel I mit einer Aldehydverbindung der Formel II in Aethanol.

10. Die gemäss dem Verfahren des Anspruchs 1 erhaltenen Mischungen.

11. Verwendung der gemäss Anspruch 10 erhaltenen Mischungen als Farbstoffmischung zum Färben und Bedrucken von Textilmaterialien, Leder und Papier aller Arten.

12. Verwendung gemäss Anspruch 11 zum Färben und Bedrucken von Polyacrylnitrilmaterialien oder sauer modifizierten Polyester- oder Polyamidmaterialien, sowie natürlichen und regenerierten Cellulosematerialien.

13. Verwendung gemäss Anspruch 11 zum Färben und Bedrucken von ligninfreiem, gebleichtem und ungeleimtem Papier.

14. Die mit der gemäss Anspruch 1 erhaltenen Mischung behandelten, bzw. gefärbten und bedruckten Materialien.

FO 7.1 DOE/cw*

Europäisches Patentamt

# EUROPÄISCHER RECHERCHENBERICHT

0094642
Nummer der Anmeldung

EP 83 10 4743

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 038 299 (CIBA-GEIGY)<br>* Ansprüche 1-14 *<br>----- | 1 | C 09 B 23/16<br>D 21 H 3/80<br>D 06 P 1/42<br>C 09 B 67/22 |

RECHERCHIERTE SACHGEBIETE (Int. Cl. 3)

C 09 B 23/00
C 09 B 67/00

Der vorliegende Recherchenbericht wurde für alle Patentansprüche erstellt.

| Recherchenort | Abschlußdatum der Recherche | Prüfer |
|---|---|---|
| DEN HAAG | 28-07-1983 | GINESTET M.E.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82